**Europäisches Patentamt**

**European Patent Office**

**Office européen des brevets**

(11) Publication number: **0 073 334**
**B1**

## (12) EUROPEAN PATENT SPECIFICATION

(45) Date of publication of patent specification: **19.11.87**

(21) Application number: **82106576.0**

(22) Date of filing: **20.07.82**

(51) Int. Cl.⁴: **B 29 C 43/00, B 65 D 41/34, B 29 L 31/56**

(54) Process and apparatus for making a closure.

(30) Priority: **24.07.81 US 286375**
**13.10.81 US 310769**
**22.06.82 US 390346**

(43) Date of publication of application:
**09.03.83 Bulletin 83/10**

(45) Publication of the grant of the patent:
**19.11.87 Bulletin 87/47**

(84) Designated Contracting States:
**DE FR IT NL SE**

(56) References cited:
**EP-A-0 026 405**
**DE-B-2 035 467**
**FR-A-1 270 357**
**FR-A-2 445 762**
**GB-A-1 283 479**
**US-A-3 329 295**
**US-A-4 090 531**
**US-A-4 196 818**

(73) Proprietor: **H-C Industries, Inc.**
**P.O. Box 472 100 West Harrison Street**
**Crawfordsville Indiana 47933 (US)**

(72) Inventor: **Wilde, Sheldon L.**
**R.R. 8**
**Crawfordsville Indiana 47933 (US)**
Inventor: **McCandless, Thomas J.**
**R.R. 6**
**Crawfordsville Indiana 47933 (US)**
Inventor: **Saunders, Robert M.**
**R.R. 2**
**Ladoga Indiana 47954 (US)**

(74) Representative: **Groening, Hans Wilhelm, Dipl.-Ing.**
**Patentanwälte Strehl Schübel-Hopf Groening Schulz Widenmayerstrasse 17 Postfach 22 03 45 D-8000 München 22 (DE)**

Courier Press, Leamington Spa, England.

## Description

The invention relates to a process and apparatus for making a plastic closure cap having a top wall portion, an annular skirt portion depending from said top wall portion, and a pilfer band at least partially detachably connected to said skirt portion, including providing a cooperating male molding plunger and a female mold having a mold cavity, depositing a quantity of moldable plastic in said mold cavity and molding said moldable plastic between said male plunger and said female mold to form said closure cap.

The afore-mentioned process is known from EP—A—0 026 405 on which the precharacterising portions of the independent claims 1 and 8 are based. The process as disclosed in this reference comprises the steps of: providing female mold means, defining a female cavity, providing plunger assembly means having external thread-forming means and means for forming said annular lip, a plunger head for forming the plurality of projections and for positioning said projections in spacial relationship to each other, said plunger assembly means being movable relative to said female mold means for molding molten plastic therebetween, relatively moving said female mold means and said plunger assembly means, depositing plastic in said female cavity to mold said molten plastic between said female mold means and said plunger assembly means to form said cap with the top wall portion, the integral internally threaded annular skirt portion, the projections in the bottom face of the cap and said internal annular lip, separating said plunger assembly means from said female mold means and removing the cap from said plunger assembly means. These afore-mentioned steps are known and necessary to form a screw-type bottle cap in accordance with US—A—4 090 631, wherein said bottle cap is molded in one piece from plastic material comprising an internal sealing skirt depending from the top of said cap and adapted to be force-fitted into the externally threaded neck of a bottle. This known cap consists of one part only and is provided with a sealing skirt and first and second sealing lips, all of which are intended to sealingly engage the associated container. The projections of the inner face of the bottom of the cap are provided to cooperate with corresponding recesses within the face of a plunger which is actually movable and rotatable about its axis in such a manner that, after the molding procedure, the cap can be unscewed from the plunger assembly means. The plunger assembly means consists of a plurality of individually movable parts cooperating in forming the special shape of the cap. Further, there is no teaching in this prior art references of compression-molding a plastic closure cap. There is no teaching of providing a stripper ring positioned about the plunger assembly which is relatively movable with respect to the plunger assembly for effecting removal of the closure from the external thread-forming surface of the plunger assembly.

According to the method disclosed in said EP—A—0 026 405, the above-mentioned process steps for making a plastic cap for a composite closure for a container are improved by depositing a predetermined quantity of molten plastic and said female cavity, relatively moving said mold means and said plunger assembly means for compression molding said molten plastic between said female mold means and said plunger assembly means, a cap-forming male plunger which is a part of said plunger assembly means has said external thread-forming means and a projection-forming plunger head for the formation of said internal thread formation, said projections at the inner cap-top and said internal lip at said skirt; a stripper ring means is positioned about said male plunger for relative movement with respect thereto, so that, after compressing molding of said closure in said female cavity with the plunger assembly means and the relative separating movement of said plunger assembly means and of said female mold means, said male plunger and said stripper ring means are relatively moved so that said stripper ring means engages said closure and strips said closure from said male plunger.

The object of the present invention is an improvement of the process and apparatus as mentioned above in the first paragraph in providing mold means of a similar type for forming the pilfer band with flexible angularly disposed projections having flexing means facilitating formation of projections having the desired dimension within said mold means and to assure a removal of the cap with pilfer band from the male mold assembly without damage to the angularly disposed projections.

This object is achieved according to the invention in a process of the type according to EP—A—0 026 405 by the following characterizing process steps:

— providing an annular mold portion positioned adjacent said male molding plunger, said annular mold portion defining a plurality of circumferentially spaced slots for forming said pilfer band with a plurality of flexible projections respectively formed in said slots wherein each said projection is formed for flexing movement about respective flexing means disposed at an acute angle relative to the axis of the said closure cap,

— relatively axially moving said male molding plunger and said annular mold portion having slots after said molding step, and

— relatively rotating said annular mold portion and said closure cap during said step of relatively moving said male molding plunger and said annular mold portion to thereby effect movement of said projections out of said slots.

The projections or wings can be adapted to engage the container during closure removal so that the pilfer band is at least partially detached from the plastic cap of the closure. Significantly, the pilfer band formed is "self-engaging" in nature, and functions to indicate partial or complete closure removal without the use of specially configured containers, and without the need for further manufacturing steps after the closure is applied to a container.

When a so-called composite closure having a sealing liner is to be formed, the present process provides for formation of the closure cap with an inwardly extending annular lip spaced from the top-wall portion of the cap and defining an annular recess therewith. The formation of the annular lip permits in situ formation of a sealing liner in the cap, with the annular lip acting to retain the liner within the cap to effect proper sealing. Liner retension can be further enhanced by formation of at least one liner-engaging projection integrally with the top wall portion of the plastic cap. In the preferred form, a plurality of circumferentially spaced, liner-engaging projections are formed in association with the annular lip of the plastic cap, with the projections and the annular lip cooperating to securely retain the sealing liner within the closure cap.

The invention also provides an improvement of an apparatus performing the above-mentioned process for making a plastic closure cap having a top wall portion, an annular skirt portion depending from said top wall portion, and a pilfer band at least partially detachably connected to said skirt portion, including a cooperating male molding plunger and a female mold having a mold cavity for receiving a quantity of moldable plastic, whereby said male molding plunger and said female mold cooperate to mold said moldable plastic to form said closure cap, characterized by:

— an annular mold portion positioned adjacent said male molding plunger, said annular mold portion defining a plurality of circumferentially spaced slots for forming said pilfer band with a plurality of flexible projections respectively formed in said slots wherein each of said projection is formed for flexing movement about respective flexing means disposed at an acute angle relative to the axis of said closure cap,

— sleeve means movable axially relative to said male molding plunger for removing said molded closure cap from said male molding plunger, and

— means for relatively rotating said annular mold portion relative to said plastic closure cap, so that, when said male molding plunger is moved axially relative to said annular mold portion, said closure cap and said annular mold portion rotate relative to each to effect movement of said projections out of said slot.

Preferably, such an apparatus includes a mandrel for inserting into said closure cap after said closure cap has been removed from said male molding plunger for re-orienting said flexible projections to their original molded disposition.

A further improvement of said apparatus includes a plurality of circumferentially spaced slots defined by said male molding plunger for forming a plurality of circumferentially spaced ribs extending between the inside surfaces of said pilfer band and said skirt portion, and a scoring knife for scoring said closure cap to distinguish said pilfer band from said skirt portion and to partially score at least some of said ribs so that said pilfer band is at least partially detachably connected to said skirt portion by said ribs. Finally, the apparatus can include a liner molding plunger for forming a sealing liner in said closure cap adjacent said top wall portion.

Brief Description of the Drawings

FIGURE 1 is a top plan view of a plastic closure formed in accordance with the present invention;

FIGURE 2 is a side elevational view in cross-section of the closure of Figure 1;

FIGURES 3A—3E diagrammatically illustrate embodiments of the closure-making process and apparatus of the present invention;

FIGURES 4—6 diagrammatically illustrate the process and apparatus for compression molding of a closure formed in accordance with the present invention;

FIGURE 7 is a fragmentary perspective view of a portion of the closure-making apparatus illustrated in Figures 4—6;

FIGURE 8 is an enlarged, fragmentary side elevational view of a portion of the closure-making apparatus illustrated in Figures 4—6;

FIGURES 9—11 diagrammatically illustrate formation of the pilfer band portion of the closure illustrated in Figures 1 and 2.

Detailed Description

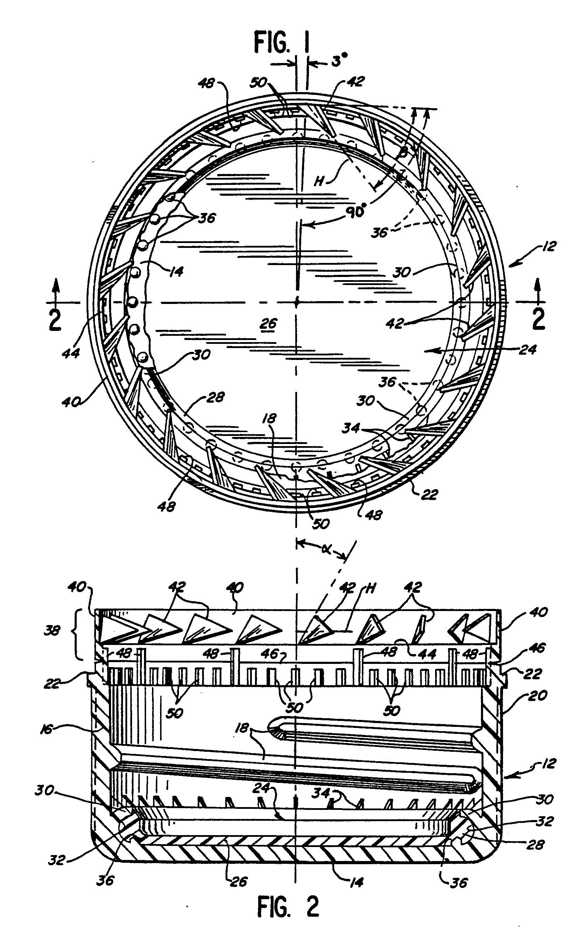

Referring to Figures 1 and 2, a plastic closure 10 formed in accordance with the present invention is illustrated. Closure 10 includes a cup-like plastic closure cap or shell 12 having a top wall portion 14 and a generally cylindrical, annular skirt portion 16 integral with the top wall portion 14. An internal thread formation 18 (shown partially cutaway in Fig. 1) is provided on the inside of skirt portion 16 which is adapted to cooperate with a like thread formation on the container to which the closure is applied. The exterior of skirt portion 16 is provided with a plurality of circumferentially spaced finger ribs 20 to facilitate manipulation of the closure. Ribs 20 terminate at an annular outer shoulder 22. Cap 12 is preferably made of moldable thermoplastic, such as polypropylene or polyethylene. Other materials can also be used.

Closure 10 is of the so-called composite type, and includes a plastic sealing liner 24 disposed generally adacent top wall portion 14. Liner 24 (shown partially cutaway in Fig. 1) includes a disc-shaped central portion 26, and an annular sealing bead portion 28. Bead portion 28 is adapted to sealingly engage an outwardly facing surface of the container to which the closure is applied, thereby providing a so-called side seal. Liner 24 is preferably made of moldable thermoplastic, such as polyvinyl chloride (PVC). Other liner materials, such as ethylene vinyl acetate (EVA) can also be used. As noted, closures formed in accordance with the present invention need not include a sealing liner such as 24.

Secure retention of sealing liner 24 within cap 12 ensures proper sealing of a container by the closure. To this end, cap 12 is formed with a liner-retaining annular lip 30 extending inwardly of skirt portion 16. Lip 30 (shown partially cutaway in Fig. 1) is spaced from top wall portion 14, and defines an annular recess 32 therewith within which is positioned at least a portion of bead portion 28 of liner 24. A plurality of circumferentially spaced reinforcing gussets 34 extending integrally between skirt portion 16 and lip 30 can be provided for reinforcing the lip 30. Preferably, annular recess 32 is formed with a maximum internal diameter greater than the inside diameter of thread formation 18.

Notably, the configuration of lip 30, as well as gussets 34, permits the lip to exhibit some flexibility in a direction away from top wall portion 14, while resisting deflection in a direction toward the top wall portion. This facilitates removal of the lip 30 from the portion of the mold in which it is formed. This also permits some deflection of the lip 30 away from wall portion 14 when the closure is fitted to a container, which is desirable since bead portion 28 of liner 24 is deformed during sealing engagement with a container, and the one-directional flexibility of lip 30 accommodates such deformation of bead portion 28. Further, the surface of lip 30 which generally faces top wall portion 14 is non-horizontal and generally extends away from the top wall portion. This configuration of lip 30 further facilitates removal of cap 12 from the molding apparatus without damage to the lip 30.

While lip 30 provides significant retention of sealing liner 24, liner retention can be enhanced by providing at least one liner-engaging projection integral with top wall portion 14. In the preferred form, a plurality of circumferentially spaced, liner-engaging projections 36 are formed integrally with top wall portion 14 in generally normal relation thereto. Projections 36 are preferably generally cylindrical and straight-sided, and are preferably arranged in a ring in close association with annular lip 30 so that the projections 36 cooperate with lip 30 for retention of liner 24 within cap 12. Various arrangements of liner-engaging projections, and various projection sizes and configurations can be used in accordance with the teachings herein. Projections 36 can, but need not, be partially or completely disposed within annular recess 32. Projections 36 are preferably formed so as not to extend through liner 24 since that can impair proper sealing by the liner. Lip 30 cooperates with projections 36 to mechanically interlock the liner 24 with the projections.

Closure 10 includes a pilfer band 38 which is formed integrally with cap 12. Pilfer band 38 includes an annular band portion 40, and a plurality of circumferentially spaced, relatively flexible wings or projections 42 integral with band portion 40. Wings 42 are adapted to coact with an annular locking ring typically provided on a container neck to resist removal of the closure from the container, and thereby at least partially detaching pilfer band 38 from skirt portion 16 to clearly indicate either partial or complete closure removal. Notably, the flexibility of wings 42 provide the pilfer band 38 with a "self-engaging" action during application of closure 10 to a container so that the wings are automatically positioned to properly function, without additional manipulation steps after application of the closure to a container.

Wings 42 are disposed at an angle "alpha" with respect to the axis of the closure, which facilitates application of closure 10 to a container, and also facilitates proper wing formation. Additionally, wings 42 are preferably dimensioned so that they interferingly engage and coact with the portion of the container disposed immediately below its locking ring to provide the desired resistance to closure removal. Wings 42 can be formed extending angularly inwardly of band portion 40 by a preferably acute angle "beta", defined by the angle between the line of intersection of a horizontal plane with the surface of the wing (shown as phantom line H), and a line tangent to the closure. Angle "beta" facilitates formation of wings 42 having the desired dimensions for interfering coaction with the container, while permitting formation of the wings within a mold portion of relatively smaller size than if wings 42 are formed radially (angle "beta" equally 90 degrees if wings 42 are radial).

While wings 42 are illustrated as generally flat and of generally uniform thickness, other configurations can be used. For example, wings 42 may be curved or each have a compound surface. Each wing 42 may be non-uniform in thickness to facilitate flexing or folding of the wings about a selected portion, such as at the edge of each wing integral with band portion 40. The preferred configuration of the wings 42 is such that the wings flex during removal from a molding apparatus and during application to a container without damage, yet have sufficient rigidity to interferingly engage the container without collapsing in order to indicate closure removal.

Notably, band portion 40 includes a shoulder 44 which provides clearance for deflection of the wings 42 during application of closure 10 to a container and during various closure formation operations. In one current embodiment, wings 42 have a thickness of approximately 0,3048 mm while shoulder 44 is approximately 0,3302—0,3556 mm wide. To assure that available clearance is sufficient for proper pilfer band formation and closure application, wings 42 are preferably spaced and dimensioned so that the wings do not overlap each other when deflected.

While pilfer band 38 is formed integrally with skirt portion 16, the pilfer band is at least partially detachably connected to skirt portion 16 of cap 12 to indicate closure removal. To this end, a score line 46 which extends substantially or entirely about closure 10 distinguishes band portion 40 from skirt portion 16. Detachable connection of pilfer band 38 is provided by a plurality of circumferentially spaced, internal ribs 48 which extend between and are integral with skirt portion 16 and band portion 40. As will be described, score line 46 is preferably formed so that it extends partially into at least some of ribs 48, whereby the scored ribs 48 are fracturable and provide a frangible connection of pilfer band 38 to skirt portion 16. To facilitate accurate formation of score line 46, another plurality of internal ribs 50 are provided, integral with skirt portion 16. Ribs 50 act to support the closure during scoring as will be described.

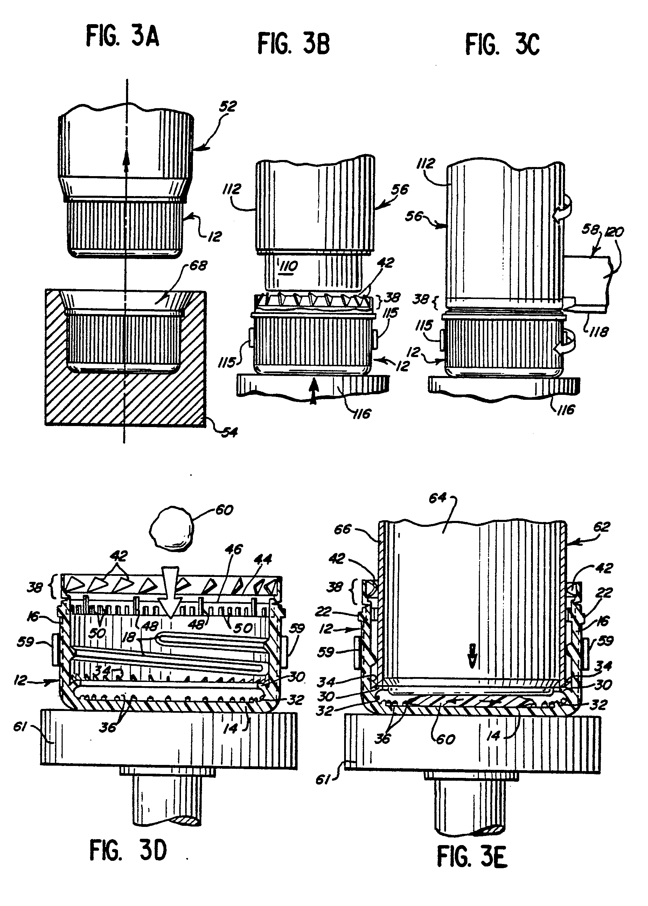

Referring to Figures 3A—3E, the basic steps of the present closure-making process are illustrated diagrammatically. These various steps will later be described in greater detail.

As shown in Figure 3A, plastic cap 12 is first compression molded between a male mold assembly 52 and a female mold 54. Pilfer band 38 is integrally formed with cap 12 during this step.

Figure 3B illustrates advancement of a reorientation mandrel assembly 56 into closure cap 12 having a pilfer band 38 by movement of the cap in order to reorient the wings 42 of the pilfer band after their deformation during removal from male mold assembly 52.

As shown in Figure 3C, the detachable connection of pilfer band 38 to closure cap 12 is next provided by a scoring assembly 58 which scores the closure to provide score line 46 as the closure is rotated together with mandrel assembly 56.

Figures 3D and 3E illustrates formation of an optional sealing liner within cap 12. As cap 12 is held in position by guides 59 upon· support surface 61, a quantity of moldable liner-forming plastic 60 is deposited on the inner surface of top wall portion 14 of cap 12, and a liner-forming assembly 62 thereafter advanced into cap 12. Assembly 62 includes a liner-forming plunger 64 disposed coaxially within an outer sleeve 66. Plunger 64 compresses plastic 60 to form sealing liner 24 within cap 12, as sleeve 66 engages lip 30 to restrain flow of plastic 60 between plunger 66 and 30. After assembly 62 is withdrawn, formation of closure 10 is complete.

Depending upon the type of closure desired, all process steps illustrated in Figure 3 need not be performed, and/or the sequence of the steps altered from that illustrated. For example, a closure having no sealing liner or pilfer band may be formed in accordance with the compression molding step of Figure 3A. A closure having a pilfer band but no sealing liner can be formed in accordance with the process steps of Figures 3A—3C. A closure having a sealing liner but no pilfer band can be formed by compression molding of plastic cap 12 in the process step of Figure 3A (without formation of a pilfer band), with a sealing liner then formed as in Figures 3D and 3E. Apparatus for closure-formation can comprise integrated machinery for performing the process steps desired, or separate pieces of equipment for performing one or more of the process steps.

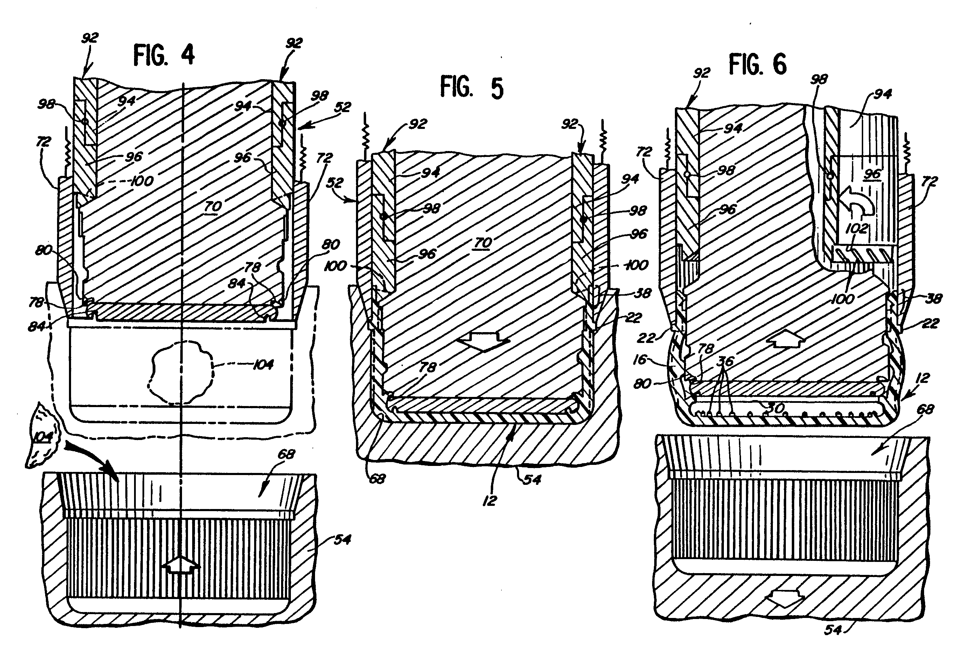

Referring to Figures 4—6, the compression molding apparatus and process step of Figure 3A will be described in detail. As noted, the compression molding apparatus includes male mold assembly 52 and female mold 54. Female mold 54 defines a mold cavity 68 shaped to form the exterior surfaces of plastic closure cap 12.

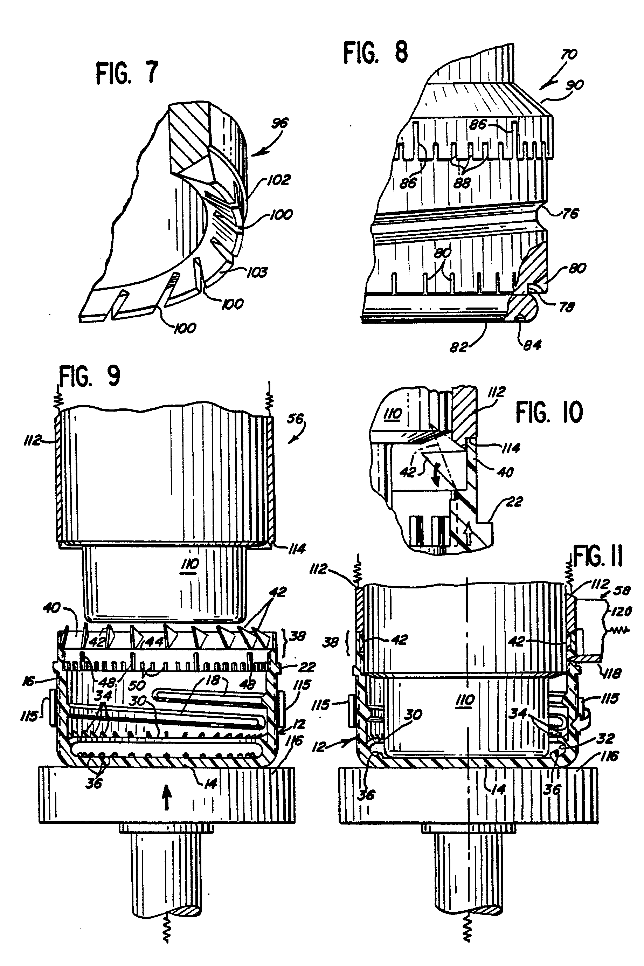

Male mold assembly 52 includes a male mold plunger 70 movably disposed coaxially within an outer sleeve 72. As shown in greater detail in Figure 8, plunger 70 is shaped to form the interior of closure 10. Plunger 70 defines thread grooves 76 for formation of thread formation 18, and an annular lip groove 78 for formation of annular lip 30. Plunger 70 may be provided with gusset slots 80 for formation of gussets 34 if desired. Plunger face 82 can be provided with one or more projection holes 84 for formation of liner projections 36.

Plunger 70 further defines rib slots 86 for formation of ribs 48, as well as support rib slots 88 for formation of support ribs 50. When a pilfer band 38 is formed integrally with plastic cap 12, wings 42 of the pilfer band are formed against frusto-conical surface 90 of plunger 70.

Male mold assembly 52 further includes an intermediate sleeve 92 positioned between outer sleeve 72 and plunger 70. Sleeve 92 includes a sleeve portion 94 and a rotatable mold portion 96 supported for rotation with respect to sleeve portion 94 by bearings 98. As best shown in Figure 7, mold portion 96 includes a plurality of wing slots 100 for formation of pilfer band wings 42. Mold portion 96 defines a shoulder 102 for formation of band portion 40 of pilfer band 38, and a lower surface 103 for formation of shoulder 44 of band portion 40.

Formation of closure cap 12 with integral pilfer band 38 will now be described. If a closure without a sealing liner is to be formed, portions of plunger 70 for formation of liner-retaining lips 30 and projections 36 need not be provided.

The molding apparatus is first positioned generally as in Figure 4, and a predetermined quantity or charge of moldable thermoplastic, preferably molten, is deposited within mold cavity 68 of female mold 54. Female mold 54 and outer sleeve 72 are then relatively moved into engagement with each other, as indicated in phantom line in Figure 4.

Significantly, outer sleeve 72 and female mold 54 are preferably provided with frusto-conical mating surfaces which facilitate alignment of the apparatus. Engagement of outer sleeve 72 with female mold 54 acts to automatically correctly align the female mold with the plunger 70 reciprocably disposed within sleeve 72. Experience has shown that wear of the mold tooling is unacceptably great if sleeve 72 is not provided to facilitate alignment of female mold 54 and plunger 70 (i.e. if plunger 70 and female mold 54 are merely moved together without an outer alignment sleeve such as 72). Outer sleeve 72 is preferably spring-biased into engagement with female mold 54 to provide an alignment force on the order of several hundred pounds to facilitate correct alignment. This novel feature permits high-speed closure formation while maintaining correct finished product tolerances, a very significant advance over previous arrangements.

Compression molding of plastic charge 104 is illustrated in Figure 5. Plunger 70 and intermediate sleeve 92 are together moved within outer sleeve 72 so that plunger 70 enters mold cavity 68 and compresses plastic charge 104 to form plastic cap 12 and pilfer band 38. Wings 42 of pilfer band 38 are formed within wing slots 100 of mold portion 96, and against surface 90 of plunger 70 against which mold portion 96 is positioned during compression.

Positive compression molding of closures has been found to provide closures having less inherent stress than closures otherwise formed. Suitable air-venting channels or other arrangements can be provided to permit escape of air during compression molding of the plastic.

Preferably, compression molding pressure is on the order of 70,3—140,6 kg/cm² (1000—2000 psi).

Notably, the molding apparatus is arranged to limit the maximum molding pressure to a predetermined value. This permits the apparatus to accommodate variations in the quantity of plastic charge 104 received within the apparatus. In this manner, each closure is correctly formed without undesired flashing of plastic. This molding technique results in slight variations in the thickness of the top wall portion 14 of the closure cap 12 attendant to variations in the quantity of plastic charge 104. Such variations in the top wall portion thickness do not impair the quality of the finished closure.

Preferably, the molding apparatus is arranged so that the plastic charge is initially compressed at the above relatively high molding pressure, with the molding pressure subsequently relatively lowered substantially to approximately 7,0—14,0 kg/cm². This preferred procedure maintains the plastic charge in compression as the plastic sets to control closure shrinkage. By reducing the forming pressure after its initial preferred peak, a machine having multiple molding assemblies does not require the structural integrity which would be necessary if peak forming pressure is simultaneously maintained in many of the machine's molding assemblies during compression molding of closures. Similarly, a machine having multiple molding assemblies is preferably arranged to reduce the above-noted preferred alignment force provided between outer sleeve 72 and female mold 54, again so that the structural integrity of the machine need not be excessive.

If desired, female mold 54 and male plunger 70 can be rotated with respect to each other as plastic 104 is compressed, to thereby impart spiral orientation to the plastic grain for enhancing hoop strength of cap 12. Formation of cap 12 using Phillips Chemical Company HGN-020—01 polypropylene, a Marlex polyolefin, introduced into mold cavity 68 at approximately 204—232°C has provided closures exhibiting the requisite strength without spiral orientation of the plastic grain.

Figure 6 illustrates removal of cap 12 with pilfer band 38 from the male mold assembly 52 so that wings 42 are not permanently damaged. As female mold 54 and male mold assembly 52 are moved out of cooperation with each other, intermediate sleeve 92 is moved upwardly. The male plunger 70 is preferably carried by intermediate sleeve 92 by a spring-biased lost motion mechanism. As sleeve 92 moves upward, outer sleeve 72 acts against shoulder 22 of cap 12 in opposition to the spring-biasing of the lost motion mechanism to keep the plunger 70 from moving upwardly with intermediate sleeve 92. Thus, the initial movement of intermediate sleeve 92 is not imparted to plunger 70 and is "lost". By this action, wings 42 are removed from wing slots 100 in mold portion 96. Relative rotation of mold portion 96 with respect to sleeve portion 94 permits this action without damage to the preferably angularly disposed wings 42. The angularly disposed wings 42 impart rotational movement to mold portion 96 in a cam-like fashion as intermediate sleeve 92 moves upwardly a sufficient distance for the wings 42 to clear wings slots 100.

After wings 42 are free of mold portion 96, intermediate sleeve 92 and male plunger 70 move together relative to outer sleeve 72 so that sleeve 72 acts against shoulder 22 of cap 12 to strip or remove the cap 12 and pilfer band 38 from plunger 70. The resilient flexibility of cap 12 permits removal in this manner without unacceptable permanent deformation of the cap. Wings 42 of pilfer band 38 are deflected upwardly during removal, their flexible nature and their angular disposition with respect to the closure axis (angle "alpha") facilitating removal in this manner. While the above "pop-off" method of closure removal from plunger 70 is preferred, closures may be unthreaded from plunger 70 by leaving the closures at least partially within female mold 54 and relatively rotating the female mold and plunger 70 during closure removal. Alternatively, closures can be unthreaded from plunger 70 by providing the lower portion of outer sleeve 72 with serrations or teeth to form like teeth on the closure meshed with the teeth of the sleeve 72, and by then relatively rotating outer sleeve 72 and plunger 70.

Referring to the process step illustrated in Figure 3B and in greater detail in Figures 9—11, reorientation of wings 42 of pilfer band 38 is illustrated. During removal from male plunger 70 as described, wings 42 are each moved in a first direction from their original molded disposition, and appear generally as in Figure 9. Disposition of wings 42 at angle "alpha" assures that all of the wings move in the same general direction. To position the wings generally in their original molded configuration for cooperation with a container, wings 42 can be reorientated by movement in a second direction opposite to the direction they are deflected during removal from plunger 70. Reorientation in this manner is provided by mandrel assembly 56. Assembly 56 includes a mandrel 110 disposed within outer sleeve 112. Outer sleeve 112 acts with mandrel 110 to reorient wings 42.

As cap 12 with pilfer band 38 is supported upon surface 116, surface 116 and assembly 56 are relatively moved toward each other. Guides 115 are provided to maintain cap 12 in position. As mandrel 110 enters and is received within cap 12, spring-biased outer sleeve 112 engages wings 42 and begins to reorient the wings. A shoulder 114 of sleeve 112 then seats against band portion 40 of pilfer band 38 as mandrel 110 and toward top wall portion 14 move toward each other and the mandrel completes reorientation of the wings 42. Mandrel 110 firmly engages top wall portion 14 of cap 12, with wings 42 urged toward band portion 40. Shoulder 44 of the band portion provides clearance to permit movement of wings 42 in this manner without excessive permanent deformation of the wings. Angle "alpha" of each wing permits proper reorientation without relative rotation of the closure and mandrel 110. When mandrel 110 and the closure are moved apart after closure scoring, the wings 42, by their resilient memory, generally resume the configuration in which they were originally molded.

Referring to Figures 3C and 11, detachable connection of pilfer band 38 to cap 12 is provided by scoring assembly 58. The scoring assembly includes a scoring knife 118 carried by a knife support 120. The closure being formed and knife 118 are brought into engagement with each other, with score line 46 preferably formed by rotation of the closure together with mandrel assembly 56 to provide a slicing-like cutting action.

Score line 46 is formed distinguishing pilfer band 38 from skirt portion 16. At least some of ribs 48 are partially cut or scored to render them frangible, thereby providing at least partial detachable connection of pilfer band 38 to cap 12. Knife support 120 is preferably arranged to engage outer sleeve 112 of mandrel assembly 56 to assure the accuracy of the depth of score line 46. Knife support 120 is preferably spring-biased into engagement with mandrel assembly 56 to compensate for any wear in the mandrel assembly to provide accurate scoring. Notably, internal support ribs 50 (as well as ribs 48) firmly engage mandrel 110 to assure correct formation of score line 46, and to provide sufficient clearance so that knife 118 does not contact mandrel 110. Additionally, support surface 116 is preferably spring-biased so that the closure is held snugly and securely to prevent slipping during scoring.

In one current closure embodiment, ribs 48 are provided having a depth or thickness of approximately 0,3556 mm and a width of approximately 0,635 mm. After closure scoring, fracturable ribs have a residual thickness of preferably approximately 0,2—0,3 mm. These dimensions are intended as illustrative since other fracturable arrangements can be formed.

If pilfer band 38 is to remain partially attached to cap 12 after removal of the closure from a container, score line 46 can be formed extending less than completely about the closure. Similarly, some of ribs 48 can be left unscored so that they are not frangible. In this regard, band portion 40 of pilfer band 38 can be scored or otherwise arranged to fail (such as by molding in of a preferentially weak area) so that during closure removal from a container, band portion 40 splits and the pilfer band remains partially attached to the cap 12. Formation of pilfer band 38 to fail in this manner is achieved by providing a suitable scoring knife for generally vertically cutting band portion 40 of the pilfer band in conjunction with partial detachable connection of band portion 40 to skirt portion 16. Such a scoring knife is preferably provided to score the band portion 40 in two places spaced from each other a distance other than the relative spacing of wings 42. In this way, band portion 40 will fail as intended even if one of the scores in band portion 40 is made at or through one of wings 42. Such scoring of band portion 40 can be made at an angle corresponding to angle "alpha" of the wings 42 to further avoid incorrect failure of the pilfer band which can result if one of the wings 42 keeps band portion 40 from failing as intended.

Referring to Figures 3D and 3E, cap 12 with pilfer band 38 appears generally as in Figure 3D after scoring and wing reorientation as described. Formation of closure 10 as shown in Figures 1 and 2 is now completed by formation of sealing liner 24.

To this end, a predetermined quantity of moldable thermoplastic, preferably molten, is deposited within cap 12 against the inner surface of top wall portion 14. Liner forming assembly 62 is next advanced into cap 12 to form liner 24. Outer sleeve 66 is moved into firm engagement against annular lip 30 of cap 12. Notably, the above-described, preferred one-directional flexibility of lip 30 permits the lip to support sleeve 66, and reinforcing gussets 34 are dimensioned to permit firm engagement of the sleeve 66 with lip 30. Depending upon the desired finished dimensions of the final closure product, sleeve 66 may be provided so as to outwardly stretch cap 12 as the sleeve is advanced into the cap to provide sufficient clearance for the sleeve without undesired permanent deformation of the closure. For manufacture of some closures, particularly those in which the inside diameter of lip 30 is greater than or not much smaller than the inside diameter of thread formation 18, a stretching sleeve fitted coaxially about outer sleeve 66 can be advanced into cap 12 with sleeve 66 to stretch the cap 12 either at or above thread formation 18 so that sleeve 66 properly engages lip 30. Such a stretching sleeve can comprise a suitably slotted expanding collet having axially extending fingers arranged to expand outwardly in response to axial movement of sleeve 66 within the collet. When finished closure dimensions permit it, lip 30 is preferably formed with an inside diameter less than the inside diameter of thread formation 18 to facilitate engagement of sleeve 66 with lip 30.

After sleeve 66 engages lip 30, liner forming plunger 24 is further advanced into cap 12 to compress plastic 60 so that it flows outwardly into annular recess 32 and against lip 30 to form sealing liner 24. The liner is compression molded with pressure preferably on the order of 70,3—140,6 kg/cm² (1000—2000 psi), with sleeve 66 restraining flow of plastic 60 between plunger 64 and lip 30. When cap 12 is formed with liner-engaging projections 36, plastic 60 flows about the projections so that the resultant liner 24 is securely mechanically interlocked with the projections. After liner-forming assembly 62 is withdrawn, formation of closure 10 is complete.

As noted, formation of some closures requires stretching of cap 12 during formation of sealing liner 24 to assure firm engagement of sleeve 66 with lip 30. Thread formation 18 can be truncated, as shown, to provide clearance for sleeve 66, but sufficient clearance must be provided so that sleeve 66 need not be excessively thin-walled.

When a lined closure is formed with pilfer band 38, stretching of only cap 12 to provide clearance for lip-engaging sleeve 66 can result in undesired failure of scored frangible ribs 48 during liner formation. Thus, formation of a closure with a sealing liner 24 and a pilfer band 28, where stretching of cap 12 is required for liner formation, requires simultaneous stretching of cap 12 and pilfer band 38 to prevent unintended failure of ribs 48. Alternately, liner 24 can be formed prior to closure scoring (formation of score line 46). When liner 24 is formed before the closure is scored, the liner-forming apparatus can be arranged to reorient the pilfer band wings 42 in the desired manner during liner formation. The closure can thereafter be scored to distinguish pilfer band 38 from skirt portion 12 to provide the desired at least partial detachable connection of the pilfer band to cap 12.

**Claims**

1. A process for making a plastic closure cap (12) having a top wall portion (14), an annular skirt portion (16) depending from said top wall portion (14), and a pilfer band (38) at least partially detachably connected to said skirt portion (16), including providing a cooperating male molding plunger (70), and a female mold (54) having a mold cavity (68), depositing a quantity of moldable plastic (104) in said mold cavity (68) and molding said moldable plastic (104) between said male plunger (70) and said female mold (54) to form said closure cap (12), characterized by:
providing an annular mold portion (96) positioned adjacent said male molding plunger (70), said annular mold portion (96) defining a plurality of circumferentially spaced slots (100) for forming said pilfer band (38) with a plurality of flexible projections (42) respectively formed in said slots (100) wherein each said projection (42) is formed for flexing movement about respective flexing means disposed at an acute angle (α) relative to the axis of said closure cap (12),
relatively axially moving said male molding plunger (70) and said annular mold portion (96) having slots (100) after said molding step, and

relatively rotating said annular mold portion (96) and said closure cap (12) during said step of relatively moving said male molding plunger (70) and said annular mold portion (96) to thereby effect movement of said projections (42) out of said slots (100).

2. A process in accordance with claim 1, including
forming each said flexible projection (42) to be dimensioned for interfering engagement with a portion below an annular locking ring of a container to which said closure cup is applied.

3. A process in accordance with claim 1 or 2, including
removing said closure cap (12) from said male molding plunger (78) so that said flexible projections (42) are each moved in a first direction, and reorienting said projections (42) to their original molded disposition by moving the projections (42) in a second direction opposite said first direction by inserting a reorientation mandrel (110) into said plastic closure cap (12).

4. A process in accordance with any of claims 1—3, including
forming a plurality of ribs (48) extending between the inside surfaces of said pilfer band (38) and said skirt portion (16), and scoring said closure cap (12) with scoring means (118) to distinguish said pilfer band (38) and said skirt portion (16) from each other and to partially score at least some of said ribs (48) whereby said pilfer band (38) is at least partially detachably connected to said skirt portion (16) by said ribs (48).

5. A process in accordance with any of claims 1—4, including
generally vertically cutting a band portion (40) of said pilfer band (38) in two places spaced from each other a distance other than the relative spacing of projections (42).

6. A process in accordance with any of claims 1—5, including
providing a sealing liner (24) in said closure cap (12) adjacent to said top wall portion (14).

7. A process in accordance with claim 6, including
molding said plastic cap (12) with an annular liner-retaining lip (30) and at least one liner-engaging projection (36),
said step of providing a sealing liner including depositing a quantity of moldable liner-forming plastic (60) in said closure cap (12), and compression molding said plastic (60) with liner molding means (62) so that it flows against and is restrained by said lip (30) to form said sealing liner (24) in engagement with said liner-engaging projection (36).

8. An apparatus for making a plastic closure cap (12) having a top wall portion (14), an annular skirt portion (16) depending from said top wall portion (14), and a pilfer band (38) at least partially detachably connected to said skirt portion (16), including a cooperating male molding plunger (70) and a female mold (54) having a mold cavity (68) for receiving a quantity of moldable plastic (104), whereby said male molding plunger (70) and said female mold (54) cooperate to mold said moldable plastic (104) to form said closure cap (12), characterized by:

an annular mold portion (96) positioned adjacent said male molding plunger (70), said annular mold portion (96) defining a plurality of circumferentially spaced slots (100) for forming said pilfer band (38) with a plurality of flexible projections (42) respectively formed in said slots (100) wherein each said projection (42) is formed for flexing movement about respective flexing means disposed at an acute angle (α) relative to the axis of said closure cap (12),

sleeve means (72) movable axially relative to said male molding plunger (70) for removing said molded closure cap (12) from said male molding plunger, and

means (98) for relatively rotating sid annular mold portion (96) relative to said plastic closure cap (12) so that when said male molding plunger (70) is moved axially relative to said annular mold portion (96), said closure cap (12) and said annular mold portion (96) rotate relative to each to effect movement of said projections (42) out of said slots (100).

9. An apparatus in accordance with claim 8, including

a mandrel (100) for insertion into said closure cap (12) after said closure cap (12) has been removed from said male molding plunger (70) for reorienting said flexible projections (42) to their original molded disposition.

10. An apparatus in accordance with claims 8 or 9, including

a plurality of circumferentially spaced slots (86) defined by said male molding plunger (70) for forming a plurality of circumferentially spaced ribs (48) extending between the inside surfaces of said pilfer band (38) and said skirt portion (16), and a scoring knife (118) for scoring said closure cap (12) to distinguish said pilfer band (38) from said skirt portion (16) and to partially score at least some of said ribs (48) so that said pilfer band (38) is at least partially detachably connected to said skirt portion (16) by said ribs (48).

11. An apparatus in accordance with claims 8-10, including

a liner molding plunger (64) for forming a sealing liner (26) in said closure cap (12) adjacent said top wall portion (14).

**Patentansprüche**

1. Verfahren zum Herstellen einer Verschlußkappe (12) aus Kunststoff mit einem oberen Wandteil (14), einem ringförmigen Mantelteil (16), der von dem oberen Wandteil (14) sich abwärts erstreckt und einem Diebstahlband (38), das mit dem Mantelteil (16) mindestens teilweise abnehmbar verbunden ist, umfassend das Zurverfügungstellen eines zusammenwirkenden Gießplungers (70) auf einer Aufnahmeform (54) mit einem Gießhohlraum (68), das Einbringen des gießfähigen Kunststoffs (104) in den Gießhohlraum (68) und das Formen des Geißplungers (70) zwischen den Plunger (70) und die Aufnahmeform (54) zum Formen der Verschlußkappe (12), gekennzeichnet durch:

Zurverfügungstellung eines ringförmigen Formteils (96), der in der Nähe des Gießplungers (70) positioniert ist und eine Mehrzahl von in Umfangsrichtung beabstandeten Schlitzen (100) zum Formen des Diebstahlbandes (38) mit einer Mehrzahl von flexiblen Vorsprüngen (42) bildet, die jeweils in den Schlitzen (100) gebildet werden, wobei jeder Vorsprung (42) im Sinne einer biegsamen Bewegbarkeit um ein entsprechendes Biegemittel geformt wird, das in einem spitzen Winkel (α) in bezug auf die Achse der Schließkappe (12) angeordnet ist,

relative axiale Bewegung des Gießplungers (70) und des ringförmigen Formteils (96) unter Bildung von Schlitzen (100) nach der Gießstufe, und

relative Drehung des ringförmigen Formteils (96) und der Schließkappe (12) während der Stufe der relativen Bewegung des Gießplungers (70) und des ringförmigen Formteils (96), so daß hierdurch das Herausbewegen der Vorsprünge (42) aus den Schlitzen (100) bewirkt wird.

2. Verfahren nach Anspruch 1, umfassend das Formen jedes flexiblen Vorsprungs (42) mit Abmessungen für eine Anlage an einem Teil, der unter einem ringförmigen Sperring eines Behälters liegt, auf dem die Verschlußkappe angebracht wird.

3. Verfahren nach den Ansprüchen 1 oder 2, umfassend das Entfernen der Verschlußkappe (12) von dem Gießplunger (78), so daß die biegsamen Vorsprünge (42) jeweils in einer ersten Richtung bewegt werden, und Neuausrichtung der Vorsprünge (42) auf ihre ursprüngliche gegossene Lage durch Bewegen der Vorsprünge (42) in eine der ersten Richtung entgegengesetzte Richtung durch Einsetzen eines Neuausrichtungsdornes (110) in die aus Kunststoff bestehende Verschlußkappe (12).

4. Verfahren nach einem der Ansprüche 1 bis 3, umfassend das Formen einer Mehrzahl von Rippen (48), die sich zwischen der Innenflächen des Diebstahlbandes (38) und des Mantelteils (16) erstrecken, und das Einschneiden der Verschlußkappe (12) mit Schneidmitteln (118), um das genannte Diebstahlband (38) und den genannten Mantelteil (16) voneinander zu unterscheiden und mindestens einige der genannten Rippen (48) teilweise zu kerben, wodurch das Diebstahlband (38) mit dem Mantelteil (16) durch die genannten Rippen (48) mindestens teilweise abnehmbar verbunden wird.

5. Verfahren nach einem der Ansprüche 1 bis 4, einschließend das im allgemeinen vertikale Einschneiden eines Wandteils (40) des genannten Diebstahlbandes (38) an zwei Stellen, die in einem Abstand voneinander angeordnet sind, der von dem relativen Abstand der Vorsprünge (42) verschieden ist.

6. Verfahren nach einem der Ansprüche 1 bis 5, umfassend das Anordnen einer Dichtungsscheibe (24) in der Verschlußkapper in der Nähe des oberen Wandteils.

7. Verfahren nach Anspruch 6, umfassend das Gießer der Kunststoffkappe (12) mit einer ringförmigen, die Dichtungsscheibe festhaltenden Lippe (30) und mindestens einem an der Dichtungsscheibe anliegenden Vorsprung (36),

wobei der Verfahrensschritt der Anordnung einer Dichtungsscheibe das Einbringen einer Menge eines gießfähigen, die Dichtungsscheibe bildenden Kunststoffs (60) in die Verschlußkappe (12) sowie das Druckgießen des Kunststoffs (60) mit der Scheibengießvorrichtung (62) umfaßt, so daß er gegen die genannte Lippe (30) fließt und von dieser zurückgehalten wird, um die Dichtungsscheibe (24) in Anlage an dem an der Dichtungsscheibe anliegenden Vorsprung (36) zu bilden.

8. Vorrichtung zum Herstellen einer Verschlußkappe (12) aus Kunststoff mit einem oberen Wandteil (14), einem ringförmigen Mantelteil (16), der von dem oberen Wandteil (14) sich abwärts erstreckt und einem Diebstahlband (38), das mit dem genannten Mantelteil (16) mindestens teilweise abnehmbar verbunden ist, umfassend einen zusammenwirkenden Gießplunger (70) und eine Aufnahmeform (54) mit einem Formhohlraum (68) zur Aufnahme einer Menge eines gießfähigen Kunststoffs (104), wodurch der Gießplunger (70) und die Aufnahmeform (54) zum Gießer des gießfähigen Kunststoffs (104) unter Bildung der Verschlußkappe (12) zusammenwirken, gekennzeichnet durch

ein ringförmiges Formteil (96), das in der Nähe des Gießplungers (70) angeordnet ist, wobei der ringförmige Formteil (96) eine Mehrzahl von in Umfangsrichtung beabstandeten Schlitzen (100) zur Bildung des Diebstahlbandes (38) mit einer Mehrzahl von flexiblen Vorsprüngen (42) bildet, die jeweils in den Schlitzen (100) geformt werden, wobei jeder genannte Vorsprung (42) für eine biegsame Bewegbarkeit um entsprechende Biegemittel geformt wird, die in einem spitzen Winkel (α) relativ zur Achse der Verschlußkappe (12) angeordnet sind,

durch eine Hülse (72) die in bezug auf den Gießplunger (70) axial bewegbar ist, um die gegossene Verschlußkappe (12) von dem Gießplunger zu entfernen, und durch Mittel (98) zur relativen Drehung des ringförmigen Formteils (96) in bezug auf die aus Kunststoff bestehende Verschlußkappe (12), so daß, wenn der Gießplunger (70) in bezug auf den ringförmigen Formteil (96) axial bewegt wird, die Verschlußkappe (12) und der ringförmige Formteil (96) sich relativ zueinander drehen, um eine Bewegung der Vorsprünge (42) aus den Schlitzen (100) heraus zu bewirken.

9. Vorrichtung nach Anspruch 8, umfassend einen Dorn (100) zum Einsetzen in die Verschlußkappe (12), nachdem die Verschlußkappe (12) von dem Gießplunger (70) für die Neuausrichtung der biegsamen Vorsprünge (42) in ihre ursprünglich gegossene Lage entfernt worden ist.

10. Vorrichtung nach den Ansprüchen 8 oder 9, umfassend eine Mehrzahl von in Umfangsrichtung beabstandeten Schlitzen (86), die von dem Gießplunger (70) zur Bildung einer Mehrzahl von in Umfangsrichtung beabstandeten Rippen (48) gebildet sind, welche sich zwischen den Innenseiten des Diebstahlbandes (38) und des Mantelteils (16) erstrecken, und ein Kerbmesser (118) zum Kerben der Verschlußkappe (12) zwecks Unterscheidung des Diebstahlbandes (38) von dem Mantelteil (16) und zum teilweisen Kerben mindestens einiger der Rippen (48), so daß das Diebstahlband (38) mit dem Mantelteil (18) durch die Rippen (48) mindestens teilweise abnehmbar verbunden ist.

11. Vorrichtung nach den Ansprüchen 8 bis 10, umfassend einen Gießplunger (64) zum Formen einer Dichtungsscheibe (26) in der Verschlußkappe (12) in der Nähe des oberen Wandteils (14).

**Revendications**

1. Procédé pour fabriquer un bouchon de fermeture (12) en matière plastique qui comprend une partie formant paroi supérieure (14), une partie formant jupe annulaire (16) qui pend de ladite partie formant paroi supérieure (14) et une bande de garantie (38) reliée à ladite partie formant jupe (16) de façon au moins partiellement séparable, dans lequel prévoit un plongeur de moulage mâle (70) et un moule femelle (54) présentant une cavité de moule (68), qui coopèrent entre eux, on dépose une certaine quantité de matière plastique moulable (104) dans ladite cavité de moule (68) et on moule ladite matière plastique moulable (104) entre ledit plongeur mâle (70) et ledit moule femelle (54) pour former ledit bouchon de fermeture (12), caractérisé en ce qu'on prévoit une partie de moule annulaire (96), placée adjacente audit plongeur de moulage mâle (70), ladite partie de moule annulaire (96) définissant une pluralité de fentes (100) circonférentiellement espacées pour munir ladite bande de garantie (38) d'une pluralité de protubérances flexibles (42) respectivement formées dans lesdites fentes (100), chaque protubérance (42) étant formée de façon à pouvoir décrire un mouvement de flexion autour de moyens de flexion respectifs disposés avec un angle aigu (α) par rapport à l'axe dudit bouchon de fermeture (12),

on déplace axialement ledit plongeur de moulage mâle (70) et ladite partie de moule annulaire (96) présentant des fentes (100) l'un par rapport à l'autre après ladite étape de moulage, et

on fait tourner ladite partie de moule annulaire (96) et ledit bouchon de fermeture (12) l'un par rapport à l'autre pendant ladite étape de déplacement relatif dudit plongeur de moulage mâle (70) et de ladite partie de moule annulaire (96) pour déterminer ainsi un mouvement desdites protubérances (42) hors desdites fentes (100).

2. Procédé selon la revendication 1, dans lequel on forme chacune desdites protubérances flexibles (42) de manière qu'elle soit dimensionnée pour être en prise de blocage avec une partie située au-dessous d'un anneau de verrouillage annulaire d'un récipient sur lequel ledit bouchon de fermeture est monté.

3. Procédé selon la revendication 1 ou 2, dans lequel on détache ledit bouchon de fermeture (12) dudit plongeur de moulage mâle (78) de manière que lesdites protubérances flexibles (42) soient déplacées chacune dans un premier sens et on réoriente lesdites protubérances (42) jusque dans leur disposition moulée initiale en déplaçant les protubérances (42) dans un deuxième sens inverse dudit premier sens, en insérant un mandrin de réorientation (110) dans ledit bouchon de fermeture en matière plastique (12).

4. Procédé selon l'une quelconque des revendications 1—3 dans lequel on forme une pluralité de nervures (48) qui s'étendent entre les surfaces internes de ladite bande de garantie (38) et de ladite partie formant jupe (16) et on entaille ledit bouchon de fermeture (12) à l'aide de moyens d'entaillage (118) pour distinguer ladite bande de garantie (38) et ladite partie formant jupe (16) l'une de l'autre, et pour entailler partiellement au moins certaines des nervures (48), de manière que ladite bande de garantie (38) soit reliée à ladite partie formant jupe (16) de façon au moins partiellement séparable par lesdites nervures (48).

5. Procédé selon l'une quelconque des revendications 1—4, dans lequel on découpe dans une direction générale verticale une partie en bande (40) de ladite bande de garantie (38) en deux endroits espacés l'un de l'autre d'une distance autre que l'espacement relatif des protubérances (42).

6. Procédé selon l'une quelconque des revendications 1—5, dans lequel on prévoit une garniture d'étanchéité (24) dans ledit bouchon de fermeture (12) à proximité de ladite partie formant paroi supérieure (14).

7. Procédé selon la revendication 6, dans lequel on moule ledit bouchon en matière plastique (12) avec une lèvre annulaire (30) de retenue de la garniture, et avec au moins une protubérance (36) en prise avec la garniture,
ladite étape consistant à prévoir une garniture d'étanchéité comprenant le dépôt d'une certaine quantité de matière plastique moulable de formation de la garniture (60) dans ledit bouchon de fermeture (12), et le moulage de ladite matière plastique (60) par compression à l'aide de moyens (62) de moulage de la garniture de manière qu'elle s'écoule contre ladite lèvre (30) et soit retenue par cette lèvre pour former ladite garniture d'étanchéité (24) en prise avec ladite protubérance (36) en prise avec la garniture.

8. Dispositif pour fabriquer un bouchon de fermeture en matière plastique (12) qui possède une partie formant paroi supérieure (14), une partie formant jupe annulaire (16) qui pend de ladite partie paroi supérieure (14) et une bande de garantie (38) qui est reliée à ladite partie formant jupe (16) de façon au moins partiellement séparable, qui comprend un plongeur de moulage mâle (70) et un moule femelle (54) présentant une cavité de moule (68) pour recevoir une certaine quantité de matière plastique moulable (104), qui coopèrent entre eux, de sorte que ledit plongeur de moulage mâle (70) et ledit moule femelle (54) coopèrent pour mouler ladite matière plastique moulable (104) de façon à former ledit bouchon de fermeture (12), caractérisé par:
une partie de moule annulaire (96) placée dans une position adjacente audit plongeur de moulage mâle (70), ladite partie de moule annulaire (96) définissant une pluaralité de fentes (100) circonférentiellement espacées pour munir ladite bande de garantie (38) d'une pluralité de protubérances flexibles (42) respectivement formées dans lesdites fentes (100), chacune desdites protubérances (42) étant formée de façon à décrire un mouvement de flexion autour de moyens de flexion respectifs disposés avec un angle aigu (α) par rapport à l'axe dudit bouchon de fermeture (12),
des moyens en forme de manchon (72) mobiles axialement par rapport audit plongeur de moulage mâle (70) pour détacher ledit bouchon de fermeture moulé (12) dudit plongeur de moulage mâle, et
des moyens (98) pour faire tourner ladite partie de moule annulaire (96) par rapport audit bouchon de fermeture en matière plastique (12) de manière que, lorsque ledit plongeur de moulage mâle (70) est déplacé axialement par rapport à ladite partie de moule annulaire (96), ledit bouchon de fermeture (12) et ladite partie de moule annulaire (96) tournent l'un par rapport à l'autre pour déterminer le mouvement desdites protubérances (42) hors desdites fentes (100).

9. Dispositif selon la revendication 8, comprenant:
un mandrin (100) destiné à s'insérer dans ledit bouchon de fermeture (12) après que ledit bouchon de fermeture (12) a été détaché dudit plongeur de moulage mâle (70) pour réorienter lesdites protubérances flexibles (42) jusque dans leur disposition initiale de moulage.

10. Dispositif selon la revendication 8 ou 9, comprenant:
une pluralité de fentes (86) espacées circonférentiellement, définies par ledit plongeur de moulage mâle (70) pour former une pluralité de nervures (48) espacées circonférentiellement qui s'étendent entre les surfaces internes de ladite bande de garantie (38) et ladite partie formant jupe (16) et un couteau d'entaillage (118) destiné à entailler ledit bouchon de fermeture (12) pour distinguer ladite bande de garantie (38) de ladite partie formant jupe (16) et à entailler partiellement au moins certaines desdites nervures (48) de manière que ladite bande de garantie (38) soit reliée à ladite partie formant jupe (16) de façon au moins partiellement séparable par lesdites nervures (48).

11. Dispositif selon les revendications 8—10, comprenant:
un plongeur (64) de moulage de garniture, destiné à mouler une garniture d'étanchéité (26) dans le bouchon de fermeture à proximité de ladite partie paroi supérieure (14).

# FIG. 1

# FIG. 2

FIG. 3A

FIG. 3B

FIG. 3C

FIG. 3D

FIG. 3E

FIG. 4

FIG. 5

FIG. 6

0 073 334

FIG. 7

FIG. 8

FIG. 9

FIG. 10

FIG. 11